# EUROPEAN PATENT APPLICATION

(11) **EP 4 848 553 A1**
(43) Date of publication of application: **02.12.2026**
(21) Application number: 25179499.6
(22) Date of filing: 28.05.2025
(51) Int. Cl.: H02M 1/40, H02M 3/335

(54) **POWER CONTROL OF A POWER CONVERTER**

(71) Applicant: Hitachi Energy Ltd, 8050 Zürich (CH)
(72) Inventor: SIEMASZKO, Daniel, 1450 Ste-Croix (CH); KLAEUSLER, Martin, 5022 Rombach (CH); RUIZ, Raul, 5300 Turgi (CH)
(74) Representative: Vossius & Partner Patentanwälte Rechtsanwälte mbB

(57) **Abstract**

The present disclosure relates to a method for power control of a power converter comprising: controlling, with a first signal, a first active switching component in a switching unit of at least one branch; controlling, with a second signal, a second active switching component in the same switching unit; determining a polarity of a monitored current through at least one inductive component coupled to the at least one branch; and adjusting the first active switching component in response to the polarity of the monitored current being positive, wherein a switching-off time of the first active switching component and a switching-on time of the second active switching component are delayed and a switching-on time of the first active switching component and a switching-off time of the second active switching component are anticipated; or adjusting the first active switching component and the second active switching component in response to the polarity of the monitored current being negative, wherein a switching-off time of the first active switching component and a switching-on time of the second active switching component are anticipated and a switching-on time of the first active switching component and a switching-off time of the second active switching component are delayed.

## Description

The present disclosure relates to a method and a device for power control of a power converter.

Power converters controlled by power electronics require precise control and robust response to reduce losses during power conversion. In particular, the controllability is often limited by the non-ideal static and dynamic behavior of switching units in power electronics.

An ideal switching unit comprising active switching component(s) achieves instantaneous switching among terminals. However, a practical implementation thereof suffers from dynamic behavior governed by semiconductor device physics. Active switching components in a switch unit exhibits a finite rise and fall time, requiring one active switching component to be forced into a non-conducting state before the other active switching component is forced into a conducting state in order to avoid simultaneous conduction. The time range where the active switching components are forced into a non-conducting state is referred to as deadtime. In case of the switching unit forming a branch, such precautionary measure avoids short circuits, preventing overshoot in voltage and excessive power consumption.

In a power converter comprising an inductive component and a switching unit, such deadtime creates uncertainty in the voltage across the inductive component. The uncertainty caused by the deadtime causes the DC component in the current through the inductive component which is associated with alteration of voltages and/or currents.

Such deadtime can be optimized by measuring the voltage drop across the active switching components or the wave shape of the phase voltage during switching to minimize DC component in the current. However, such approaches lead to only partial removal of the DC component in the current through the inductive component.

In addition, a step change applied to the frequency or the phase of the voltage across the inductive component alters the period of current flow causing the power peak and DC component in the current. Such peak in power deteriorates the transitional timing response and limits the fields of applications due to hitting operational limits and thus inductive element saturation.

Thus, there is a need to improve the mitigation of the induced DC component in the current in a power converter and the step response to frequency and phase shift to achieve saturation-free control.

The above-mentioned objects are achieved with the features of the independent claims. Dependent claims define preferred embodiments of the disclosure.

In particular, the present disclosure relates to a method for power control of a power converter comprises controlling, with a first signal, a first active switching component in a switching unit of at least one branch; controlling, with a second signal, a second active switching component in the same switching unit; determining a polarity of a monitored current through at least one inductive component coupled to the at least one branch; and adjusting the first active switching component and the second active switching component in response to the polarity of the monitored current being positive, wherein a switching-off time of the first active switching component and a switching-on time of the second active switching component are delayed and a switching-on time of the first active switching component and a switching-off time of the second active switching component are anticipated; or adjusting the first active switching component and the second active switching component in response to the polarity of the monitored current being negative, wherein a switching-off time of the first active switching component and a switching-on time of the second active switching component are anticipated and a switching-on time of the first active switching component and a switching-off time of the second active switching component are delayed.

According to an embodiment, a delayed switching time refers to a switching time that occurs later than originally planned.

According to an embodiment, the switching-off time of an active switching component being delayed by a time period means that the switching-off occurs this time period later than it would have in the absence of this adjustment. The switching-on time of an active switching component being delayed by a time period means that the switching-on occurs this time period later than it would have in the absence of this adjustment.

According to an embodiment, an anticipated switching time refers to a switching time that occurs earlier than originally planned.

According to an embodiment, the switching-off time of an active switching component being anticipated by a time period means that the switching-off occurs this time period earlier than it would have in the absence of this adjustment. The switching-on time of an active switching component being anticipated by a time period means that the switching-on occurs this time period earlier than it would have in the absence of this adjustment.

Various embodiments may advantageously implement the following features:
According to an embodiment, the switching-off time of the first active switching component is delayed by a time period T_{d1} and the switching-on time of the second active switching component is delayed by a time period T_{d1}', and the switching-on time of the first active switching component is anticipated by a time period Tₐ₁ and the switching-off time of the second active switching component is anticipated by a time period Tₐ₁'.

According to an embodiment, the switching-off time of the first active switching component is anticipated by a time period Tₐ₂ and the switching-on time of the second active switching component is anticipated by a time period Tₐ₂', and the switching-on time of the first active switching component is delayed by a time period T_{d2} and the switching-off time of the second active switching component is delayed by a time period T_{d2}'.

According to an embodiment, the time period T_{d1} has the same duration as the time period Tₐ₁.

According to an embodiment, the time period T_{d1}' has the same duration as the time period Tₐ₁'.

According to an embodiment, the time period Tₐ₂ has the same duration as the time period T_{d2}.

According to an embodiment, the time period Tₐ₂' has the same duration as the time period Td2'.

According to an embodiment, the method for power control of a power converter further comprises generating, a branch output voltage based on the adjustments, i.e., the adjusting, of the first active switching component and the second active switching component.

According to an embodiment, the first active switching component and the second active switching component are operated in an opposite way, such that when the first active switching component is in a conducting state, the second active switching component is in a non-conducting state, and when the first active switching component is in a non-conducting state, the second active switching component is in a conducting state.

According to an embodiment, the first active switching component and the second active switching component are at least one of an insulated-gate bipolar transistor, a metal-oxide-semiconductor field-effect transistor, or a bipolar transistor or a thyristor.

According to an embodiment, a method for power control of a power converter further comprises independently adjusting at least one of a third active switching component, a fifth active switching component and a seventh active switching component in the same manner as the first active switching component; or independently adjusting at least one of a fourth active switching component, a sixth active switching component and an eighth active switching component in the same manner as the second active switching component.

A power converter may comprise a third active switching component in a switching unit of a second branch and a fourth active switching component in the switching unit of the second branch. In such case, the method may comprise controlling the third active switching component with a third signal; controlling the fourth active switching component with a fourth signal; determining a polarity of a monitored current through at least one inductive component coupled to the second branch; and adjusting the third active switching component in the same manner as the first active switching component or adjusting the fourth active switching component in the same manner as the second active switching component.

In other words, the method may comprise adjusting the third active switching component and the fourth active switching component in response to the polarity of the monitored current being positive, wherein a switching-off time of the third active switching component and a switching-on time of the fourth active switching component are delayed and a switching-on time of the third active switching component and a switching-off time of the fourth active switching component are anticipated; or adjusting the third active switching component and the fourth active switching component in response to the polarity of the monitored current being negative, wherein a switching-off time of the third active switching component and a switching-on time of the fourth active switching component are anticipated and a switching-on time of the third active switching component and a switching-off time of the fourth active switching component are delayed. It is understood by the skilled person that the fifth active switching component etc., can be adjusted in the same manner.

A power converter may comprise a fifth active switching component in a switching unit of a third branch and a sixth active switching component in the switching unit of the third branch. In such case, the method may comprise controlling the fifth active switching component with a fifth signal ; controlling the sixth active switching component with a sixth signal; determining a polarity of a monitored current through at least one inductive component coupled to the third branch; and adjusting the fifth active switching component in the same manner as the first active switching component or adjusting the sixth active switching component in the same manner as the second active switching component.

A power converter may comprise a seventh active switching component in a switching unit of a fourth branch and an eighth active switching component in the switching unit of the fourth branch. In such case, the method may comprise controlling the seventh active switching component with a seventh signal; controlling the eighth active switching component with an eighth signal; determining a polarity of a monitored current through at least one inductive component coupled to the fourth branch; and adjusting the seventh active switching component in the same manner as the first active switching component or adjusting the eighth active switching component in the same manner as the second active switching component.

According to an embodiment, the power converter comprises a first active bridge. The first and the second branch may belong to the first active bridge. According to an embodiment, the power converter comprises a second active bridge. The third and the fourth branch may belong to the second active bridge.

A duty cycle of a signal may be defined by the ratio between the activation period and a reference period.

A reference period may be the period of a reference signal. It is understood by the skilled person that a reference signal may be generated internally and/or fed to the converter or an auxiliary circuit to provide a timing reference.

According to an embodiment, an activation period of the first signal and an activation period of the second signal are compared to a reference period *T_{ref}* to calculate the first duty cycle for the at least one branch.

According to an embodiment, the first signal having a first electrical component and the second signal having a second electrical component are periodic waveforms in any shape.

According to an embodiment, the activation period of the first signal and the activation period of the second signal are set such that the first active switching component and the second active switching component are not conducting for a time range *T_{Dead}.* This time range may be known as deadtime to the skilled person.

According to an embodiment, the time range *T_{Dead}* may be dependent on the at least one switching unit.

According to an embodiment, a first electrical component is arranged in parallel to the first active switching component and a second electrical component is arranged in parallel to the second active switching component. During the time range *T_{dead}* the first electrical component and the second electrical component may act as a current source or sink.

According to an embodiment, during the adjusting the first active switching component or the second active switching component, a ratio between the time range *T_{Dead}* and a reference period *T_{ref}* is kept constant.

According to an embodiment, during the adjusting the first active switching component or the second active switching component, the time range *T_{Dead}* is kept constant.

According to an embodiment, the method comprises iterating the determining a polarity of the monitored current and the adjusting the first active switching component and the second active switching component.

According to an embodiment, the periods of the first signal and the second signal are between 1kHz and 25kHz.

According to an embodiment, the power converter comprises or is at least one of an AC/AC, AC/DC, DC/DC, or DC/AC converter, in particular an active bridge converter, more particularly a dual active bridge converter.

According to an embodiment, the method comprises altering a phase shift based on at least two target phase shifts.

According to an embodiment, the method comprises keeping the phase shift between the first electrical component and the third electrical component to zero; keeping the phase shift between the fifth electrical component and the seventh electrical component to zero; and controlling the phase shift between the first electrical component and the fifth electrical component.

According to an embodiment, the altered phase shift comprises a current target phase shift and/or a previous phase shift.

According to an embodiment, the at least two target phase shifts are indexed using a reference signal.

According to an embodiment, the at least two target phase shifts are consecutive phase shifts.

According to an embodiment, the at least two target phase shifts are consecutive indexed phase shifts.

According to an embodiment, the altering comprises or is calculating a mean value of the at least two target phase shifts.

According to an embodiment, the altering comprises or is calculating a mean value of the at least two indexed target phase shifts.

According to an embodiment, a period is altered based on at least two target periods.

According to an embodiment, a target period is converted from a target frequency.

According to an embodiment, the target frequency is a continuous or a discontinuous function.

According to an embodiment, the target period and/or the target frequency is indexed for every frequency value.

According to an embodiment, a period is altered based on the at least two indexed target periods.

According to an embodiment, the first electrical component and the fifth electrical component are controlled based on the altered period.

According to an embodiment, the altered period comprises a current target period and/or a previous target period.

According to an embodiment, the altered period comprises a current target period and/or a previous indexed target period.

According to an embodiment, the period of the reference signal may be the same as the altered period or the target period.

According to an embodiment, the period of the reference signal may be the same as the altered period or the indexed target period.

According to an embodiment, the at least two target periods are the reference period *T_{ref}.*

According to an embodiment, the at least two target periods are consecutive periods.

According to an embodiment, the altering comprises or is calculating a mean value of the at least two target periods.

According to an embodiment, the altering comprises or is calculating a mean value of the at least two indexed target periods.

According to an embodiment, the method comprises iterating the altering a period based on the at least two target periods, and the adjusting the first active switching component and the second active switching component.

The present disclosure also relates to a controller for power control of a power converter. The controller comprises a processor. The processor is configured to carry out the method of any one of the aforementioned embodiments.

The present disclosure also relates to a system comprising a controller as described above and a power converter as described above.

The exemplary embodiments disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
Fig. 1 shows an exemplary power converter according to an embodiment of the present disclosure, in particular a DC/DC dual active bridge converter isolated by a transformer.
Fig. 2 shows exemplary signals of a power converter according to an embodiment of the present disclosure.
Fig. 3 shows a flowchart of a method according to an embodiment of the present disclosure.
Fig. 4 shows exemplary signals and the monitoring current, in response to phase shifts, of a power converter.
Fig. 5 shows exemplary signals and the monitoring current, in response to phase shifts, of a power converter according to an embodiment of the present disclosure.
Fig. 6 shows exemplary signals and the monitoring current, in response to frequency shifts, of a power converter according to an embodiment of the present.
Fig. 7a shows an exemplary branch comprising at least one switching unit according to an embodiment of the present disclosure.
Fig. 7b illustrates a dead time effect on voltage seen as a function of branch current polarity according to an embodiment of the present disclosure.
Fig. 8 shows the voltage applied to the inductor according to an embodiment of the present disclosure.
Fig. 9 shows exemplary signals sent by modulator according to an embodiment of the present disclosure.
Fig. 10 shows exemplary signals sent by modulator according to an embodiment of the present disclosure.
Fig. 11a and 11b show simulated current and voltage responses to a step phase shift applied to a power converter according to an embodiment of the present disclosure.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

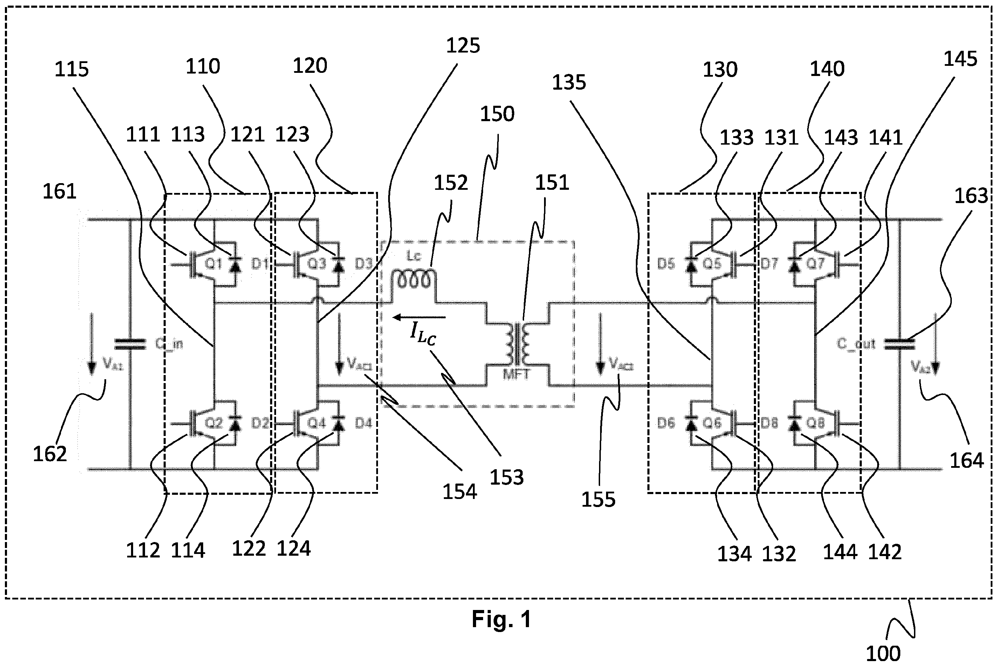

Fig. 1 shows an exemplary power converter according to an embodiment of the present disclosure, in particular a DC/DC dual active bridge converter isolated by a transformer.

In the embodiment shown in Fig. 1, a power converter 100 is a DC/DC converter. The input voltage 162 is measured over a capacitor 161 and the output voltage 164 is measured over a capacitor 163. The converter comprises a transformer unit 150, where a transformer 151 is series connected with a leakage inductor 152. However, it is understood by the skilled person that the at least one inductor may be any inductive component either as a self-standing component and/or a representation of parasitic component. A current through the leakage inductor 152 is the monitored current 153. The transformer unit 150 is coupled to at least one branch 115 comprising at least one switching unit 110. The at least one switching unit 110 comprises a first active switching component 111 and a second active switching component 112 acting as switches. A first diode 113 is connected in parallel to the first active switching component 111 and a second diode is connected in parallel to the second active switching component 112. The transformer unit 150 is further coupled to a second branch 125 comprising at least one switching unit 120. The at least one switching unit 120 comprises a third active switching component 121 and a fourth active switching component 122. A third diode 123 is connected in parallel to the third active switching component 121 and a fourth diode 124 is connected to the fourth active switching component 122. The voltage across the node coupling the transformer unit 150 to the first branch 115 and the node coupling the transformer unit 150 to the second branch 125 is referred as a primary voltage 154. The transformer is further coupled to a third branch 135 comprising at least one switching unit 130. The at least one switching unit 130 comprises a fifth active switching component 131 and a sixth active switching component 132. A fifth diode 133 is connected in parallel to the fifth active switching component 131 and a sixth diode 134 is connected in parallel to the sixth active switching component 132. The transformer is further coupled to a fourth branch 145 comprising at least one switching unit 140. The at least one switching unit 140 comprises a seventh active switching component 141 and an eighth active switching component 142. A seventh diode 143 is connected in parallel to the seventh active switching component 141 and an eighth diode 144 is connected in parallel to the eighth active switching component 142. The voltage across the node coupling the transformer unit 150 to the third branch 135 and the node coupling the transformer unit 150 to the fourth branch 145 is referred as a secondary voltage 155.

Although the converter comprises four branches each comprising at least one switching unit, it is understood by the skilled person that the present disclosure is not limited thereto. It is further understood by the skilled person that the present disclosure is not limited to one switching unit. Furthermore, it is understood by the skilled person that the present disclosure is not limited to each switching unit comprising two active switching components. According to an embodiment, a power converter may comprise at least one inductive component and at least one branch having at least one switching unit, the at least one switching unit comprising a first active switching component and a second active switching component acting as switches and the at least one inductive component being coupled to the at least one branch.

Although omitted for visibility, it is understood by the skilled person that the first active switching component 111 is controlled by a first signal with a first electrical component (e.g., diode) D₁. Similarly, it is further understood by the skilled person that the second active switching component to the eighth active switching component 112~142 are controlled by the respective signal.

According to an embodiment, a duty cycle in each branch for two electrical components of each full bridge converter is operated at the same frequency.

According to an embodiment, the power converter comprises or is at least one of an AC/AC, AC/DC, DC/DC, or DC/AC converter, in particular an active bridge converter, more particularly a dual active bridge converter.

According to an embodiment, a first active switching component and a second active switching component are at least one of an insulated-gate bipolar transistor, a metal-oxide-semiconductor field-effect transistor, a bipolar transistor or a thyristor.

According to an embodiment, electrical components are connected in parallel to the active switching components. The parallel connection comprises parallel connections with different polarity orientation such as anti-parallel connection.

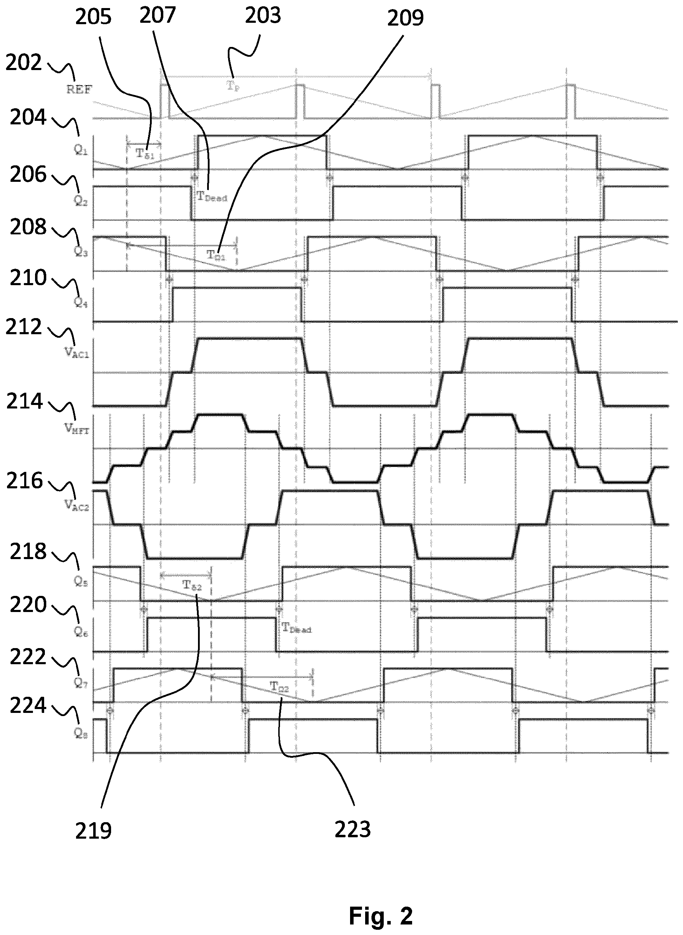

Fig. 2 shows exemplary signals of a power converter according to an embodiment of the present disclosure. In particular, the power converter is the embodiment power converter 100 shown in Fig. 1.

A reference signal 202 has a reference period *T_{P}* 203. A first signal 204 controls the first active switching component 111. A second signal 206 controls the second active switching component 112. The activation period of the first signal 204 and an activation period of the second signal 206 are compared to a reference period *T_{P}* 203 to calculate the first duty cycle for the first branch of the first diode D1 and the second diode D2. It is understood by the skilled person that the activation period is the period during which the controlling active switching component is forced into a conducting state.

A third signal 208 controls the third active switching component 121. A fourth signal 210 controls the fourth active switching component 122. The activation period of the third signal 208 and an activation period of the fourth signal 210 are compared to a reference period *T_{P}* 203 to calculate the second duty cycle for the second branch of the third diode D3 and the fourth diode D4.

A fifth signal 218 controls the fifth active switching component 131 with. A sixth signal 220 controls the sixth active switching component 132. The activation period of the fifth signal 218 and an activation period of the sixth signal 220 are compared to a reference period *T_{P}* 203 to calculate the third duty cycle for the third branch of the fifth diode D5 and the sixth diode D6.

A seventh signal 222 controls the seventh active switching component 141. An eighth signal 224 controls the eighth active switching component 142. The activation period of the seventh signal 222 and an activation period of eighth signal 224 are compared to a reference period *T_{P}* 203 to calculate the fourth duty cycle for the fourth branch of the seventh diode D7 and the eighth diode D8.

Furthermore, a voltage applied across the transformer unit 150 is the desired transformer voltage 214 and is a subtraction of the desired secondary voltage 216 from the desired primary voltage 212.

The activation period of the first signal 204 controlling the first component 111 and the activation period of the second signal 206 controlling the second component 112 are set such the first active switching component 111 and the second active switching component 112 are not conducting for a time range *T_{Dead} 207.*

The activation period of the third signal 208 controlling the third component 121 and the activation period of the fourth signal 210 controlling the fourth component 122 are set such the third active switching component 121 and the fourth active switching component 122 are not conducting for a time range *T_{Dead} 207.*

The activation period of the fifth signal 218 controlling the fifth component 131 and the activation period of the sixth signal 220 controlling the sixth component 132 are set such the fifth active switching component 131 and the sixth active switching component 132 are not conducting for a time range *T_{Dead} 207.*

The activation period of the seventh signal 222 controlling the seventh component 141 and the activation period of the eighth signal 224 controlling the eighth component 142 are set such the seventh active switching component 141 and the eighth active switching component 142 are not conducting for a time range *T_{Dead} 207.*

A first branch phase shift 205 sets the timing of the voltage transition of the first branch 115 and a second branch phase shift 209 sets the timing of the voltage transition of the second branch 125. The difference between the first branch phase shift 205 and the second branch phase shift 209 defines the time duration which the desired primary voltage 212 stays on each signal level.

A third branch phase shift 219 sets the timing of the voltage transition of the third branch 135 and a fourth branch phase shift 223 sets the timing of the voltage transition of the fourth branch 145. The difference between the third branch phase shift 219 and the fourth branch phase shift 223 defines the time duration which the desired secondary voltage 216 stays on each signal level.

The desired inductor voltage 214 applied on the inductive component 153 is the difference between the desired primary voltage 212 applied to the primary voltage 154 and the desired secondary voltage 216 applied to the secondary voltage 155 and is controlled by the phase shifts 205 209 219 223.

It is understood by the skilled person that the first signal 204 and the second signal 206 are phase shifted by the first branch phase shift 205 with respect to the reference signal 202. It is further understood by the skilled person that the third signal 208 and the fourth signal 210 are phase shifted by the second branch phase shift 209 with respect to the reference signal 202. Similarly, the fifth signal 218 and the sixth signal 220 are phase shifted by the third branch phase shift 219 with respect to the reference signal 202. The seventh signal 222 and the eighth signal 224 are phase shifted by the fourth branch phase shift 223 with respect to the reference signal 202.

Although constant time range *T_{Dead}* 207 is presented, it is understood by the skilled person that the time range *T_{Dead}* 207 formed by the first signal 204 and the second signal 206 may be different from the time range *T_{Dead}* 207 formed by the third signal 208 and the fourth signal 210. It is further understood by the skilled person that the time range *T_{Dead}* 207 may be dependent on the switching unit.

During time range *T_{Dead}* 207, the monitored current 153 flows comprise the current flow through at least one of the connected in parallel diodes 113 114 123 124 133 134 143 144. The direction of the monitored current 153 flow determines the polarity of the monitored current 153. It is understood by the skilled person that one can infer the voltage at the nodes coupling the transformer unit 150 and the branches 115 125 135 145 based on the polarity of the monitored current flow 153. It is further understood by the skilled person that the inferred voltages during the time range *T_{Dead}* 207 causes discrepancy between the primary voltage 154 and the desired primary voltage 212 and between the secondary voltage 155 and the desired secondary voltage 216. Consequently, there exists a discrepancy between the applied inductor voltage and the desired inductor voltage 214. It is understood by the skilled person such lack of control during the time range *T_{Dead}* 207 leads to the DC component in the monitored current 153.

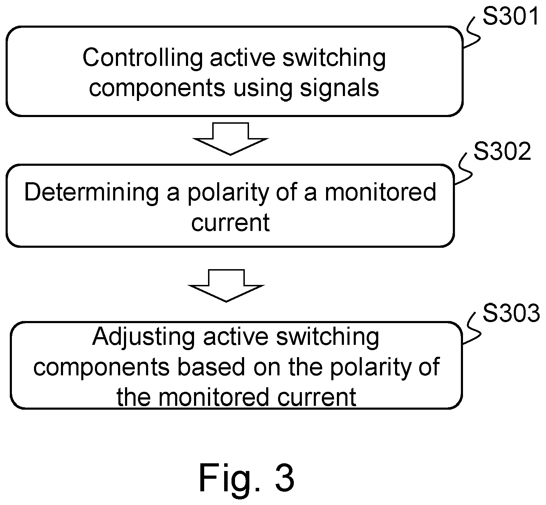

Fig. 3 shows a flowchart of a method according to an embodiment of the present disclosure.

In S301, a first active switching component is controlled with a first signal and a second active switching component is controlled with a second signal.

In S302, a polarity of a monitored current through the at least one inductive component is determined based on the monitored current. Although the monitoring current is not part of the method shown in the embodiment in Fig.3, it is understood by the skilled person that determining the polarity requires monitoring.

In S303, the first active switching component and the second active switching component are adjusted based on the determined polarity of the monitored current.

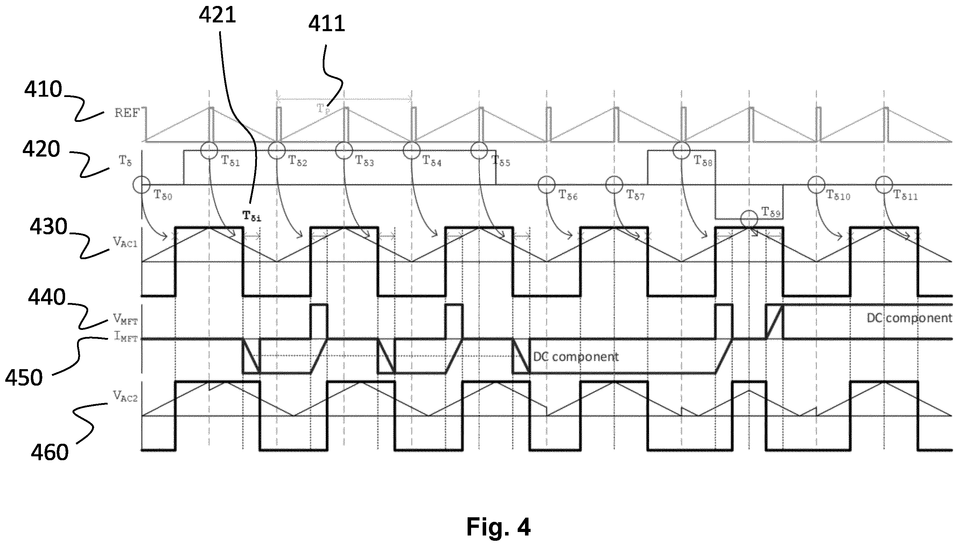

Fig. 4 shows exemplary signals and the monitoring current, in response to phase shifts, of a power converter. In particular, the power converter comprises the transformer unit 150 of the embodiment shown in Fig. 1. However, it is understood by the skilled person that the present disclosure is not limited thereto.

A reference signal 410 has a reference period 411. A target phase shift 420 is a continuous function and is indexed at every half of the reference period 411. A voltage applied across the transformer unit 150 is the transformer voltage 440 and is a subtraction of the secondary voltage 460 from the primary voltage 430.

At every half the reference period 411, the target phase shift 420 is indexed and phase-shifts the secondary voltage 460 by the indexed target phase shift 420 with respect to the primary voltage 430 at the earliest transition of the primary voltage 430. The earliest transition of the primary voltage 430 is the transition after the target-phase-indexing half period 411. It is understood by the skilled person that the transition comprises any change in the value of the considered parameter. For instance, the transition may comprises altering the polarity and/or alternating among set values. The phase-shifting the secondary voltage 460 by the indexed target phase shift 420 with respect to the primary voltage 430 causes the transformer voltage 440 to induce DC component in the monitored current 450.

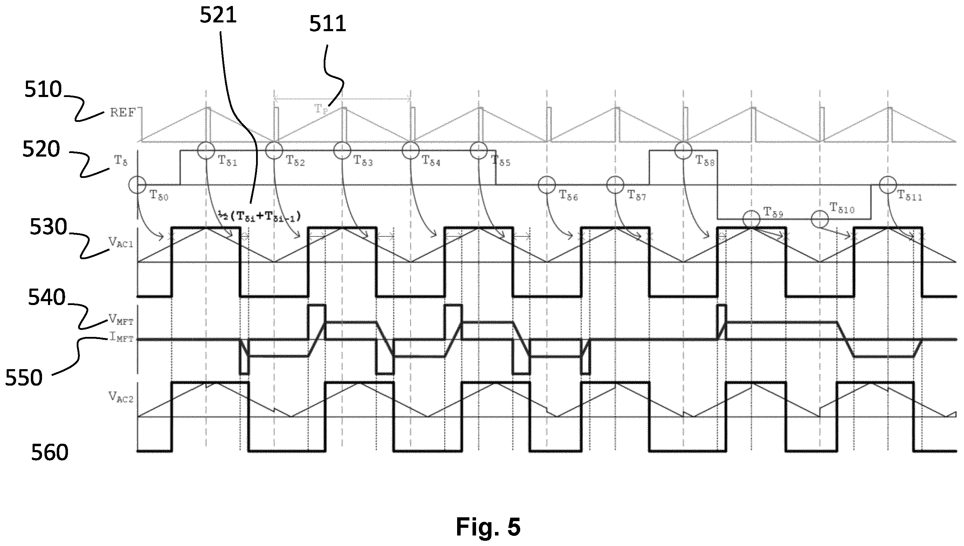

Fig. 5 shows exemplary signals and the monitoring current, in response to phase shifts, of a power converter according to an embodiment of the present disclosure. In particular, the power converter comprises the transformer unit 150 of the embodiment shown in Fig. 1.

However, it is understood by the skilled person that the present disclosure is not limited thereto.

A reference signal 510 has a reference period 511. A target phase shift 520 is a continuous function and is indexed at every half of the reference period 511. A voltage applied across the transformer unit 150 is the transformer voltage 540 and is a subtraction of the secondary voltage 560 from the primary voltage 530.

At every half the reference period 511, the target phase shift 520 are indexed and phase-shifts the secondary voltage 560 by a mean value of two consecutive indexed target phase shift 520 with respect to the primary voltage 530 at the earliest transition of the primary voltage 530. In the embodiment shown in Fig.5, an altered phase shift at the *i^{th}* half reference period is calculated by averaging the two consecutive target phase shifts at the *i^{th}* and (i - 1)*^{th}* half reference periods as ${T}_{δi , altered} = \frac{1}{2} \left({T}_{δi}-{T}_{δi - 1}\right)$ where *T_{δn}* denotes the phase shifts at the *n^{th}* half reference period. When step changes are applied to the target phase shifts, the altered phase shift reduces the phase shift of the secondary voltage 560 with respect to the primary voltage 530 which is reflected on the transformer voltage 540 as a shorter period thereof with non-zero amplitude. As a result, the increase in the monitored current 550, or decrease in the monitored current 550 depending on the polarity, is reduced with respect to the monitored current 450 of the embodiment shown in Fig.4. Consequently, the DC component of the monitored current 550 is not induced.

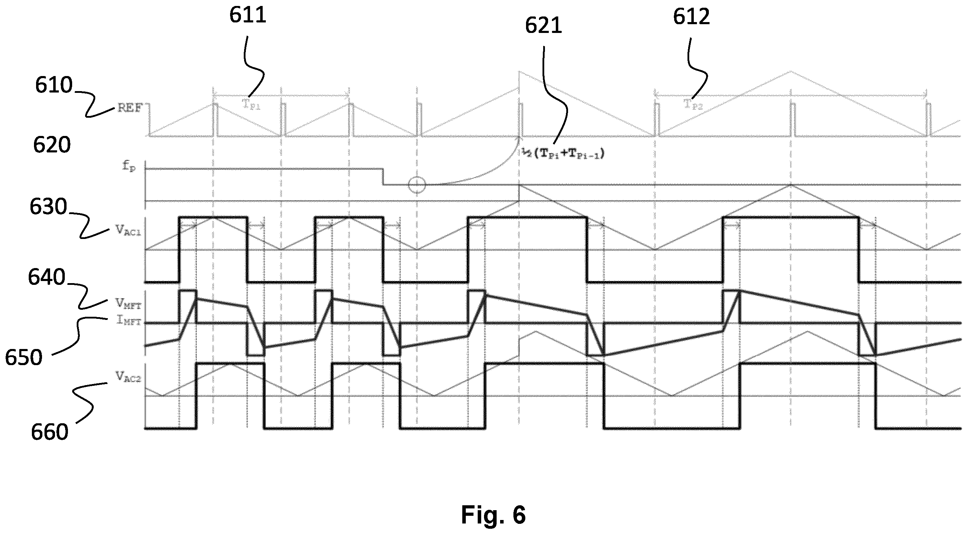

Fig. 6 shows exemplary signals and the monitoring current, in response to frequency shifts, of a power converter according to an embodiment of the present.

A reference period 610 has a first reference period 611 based on the target frequency 620 and a second reference period 621 based on the target frequency 620. The target frequency 620 is a continuous function and is indexed for every frequency value.

In the embodiment shown in Fig.6, the altered reference period is calculated by averaging the two consecutive target reference periods, in response to a step change in the target frequency 620, as ${T}_{Pi , altered} = \frac{1}{2} \left({T}_{pi}-{T}_{pi - 1}\right)$ where *Tₚₙ* denotes the reference period of the *n^{th}* indexed frequency value. Although the conversion is omitted, it is understood by the skilled person that the target frequency 620 can be easily converted into the target reference period. As the result, the altered reference period changes the period in two steps, thereby maintaining the constant periods with non-zero-amplitudes of transformer voltage 640. Consequently, the DC component of the monitored current 650 is not induced.

However, the switching time of the switching components in the embodiments shown in Figs. 4 to 6 may not be accurate enough to generate an ideal output voltage (e.g., V_{AC1}), and thus the DC component may still be induced. Some embodiments of the present disclosure provide a solution to modify switching time of the switching components to further reduce the DC component and generate an ideal output voltage or at least reduce the DC component significantly over the solutions proposed in the prior art.

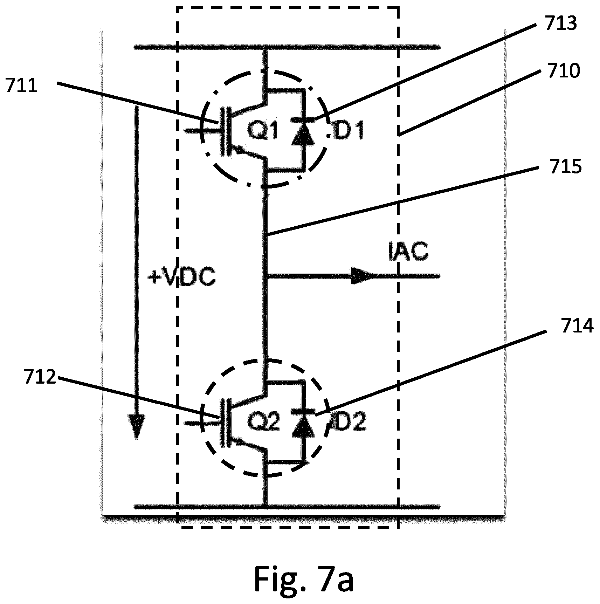

Fig. 7a shows an exemplary branch comprising at least one switching unit according to an embodiment of the present disclosure.

In the embodiment shown in Fig. 7a, a transformer unit is coupled to at least one branch 715 comprising at least one switching unit 710. The at least one switching unit 710 comprises a first active switching component 711 and a second active switching component 712 acting as switches. A first diode 713 is connected in parallel to the first active switching component 711 and a second diode 714 is connected in parallel to the second active switching component 712. An input voltage applied to the inductor to the branch 715 is referred as V_{DC}. A branch output voltage is referred as V_{AC}. An output current through the inductor is referred as the monitored branch current I_{AC}.

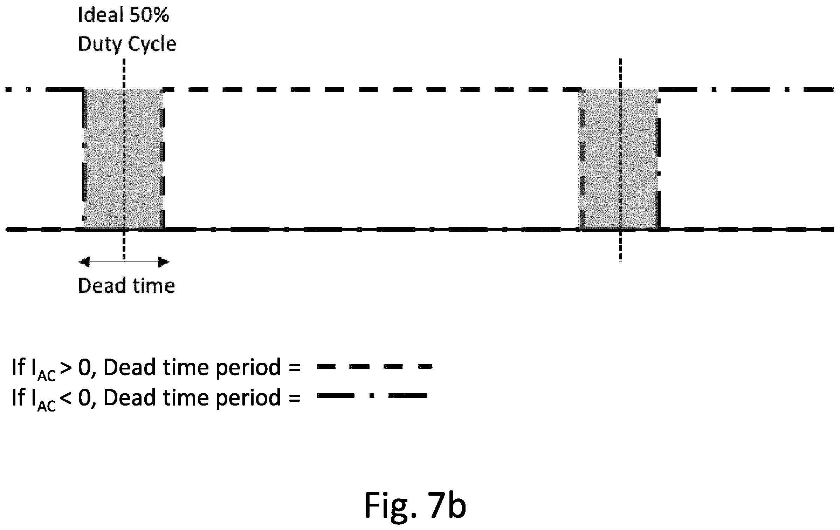

Fig. 7b illustrates a deadtime effect on voltage seen as a function of branch current polarity according to an embodiment of the present disclosure. It is understood by the skilled person that the deadtime mitigation concept comes for completing the phase-shift step change concept for avoiding DC component in the MFT current. The deadtime that is needed for operating power switches introduces a deadtime period, as illustrated in Fig. 7b.

During the deadtime period, the branch output voltage value V_{AC1} can take either positive or negative input voltage. The voltage value with which the active switching component is driving during the deadtime period depends on the polarity of the branch current I_{AC}, or more specifically the conducting diode (e.g., 713 or 714) of the branch. If the polarity of the branch current I_{AC} is negative, the voltage value with the first active switching component 711 may conduct during the deadtime period, and the branch output voltage value may take the positive input voltage. If the polarity of the branch current I_{AC} is positive, the voltage value with the second active switching component 712 may conduct during the deadtime period, and the branch output voltage value may take the negative input voltage. The deadtime effect can be specially damaging at higher operating frequencies because its value (typically 1-10µs) gets significant when compared to the operating period (typically 40-100 µs).

Some embodiments of the present disclosure provide a method to reduce the deadtime effect by adjusting the switching time associated with the switching components and generating an ideal output branch voltage (e.g., V_{AC1}) or at least generate an output branch voltage which is significantly improved over the solution available in the prior art.

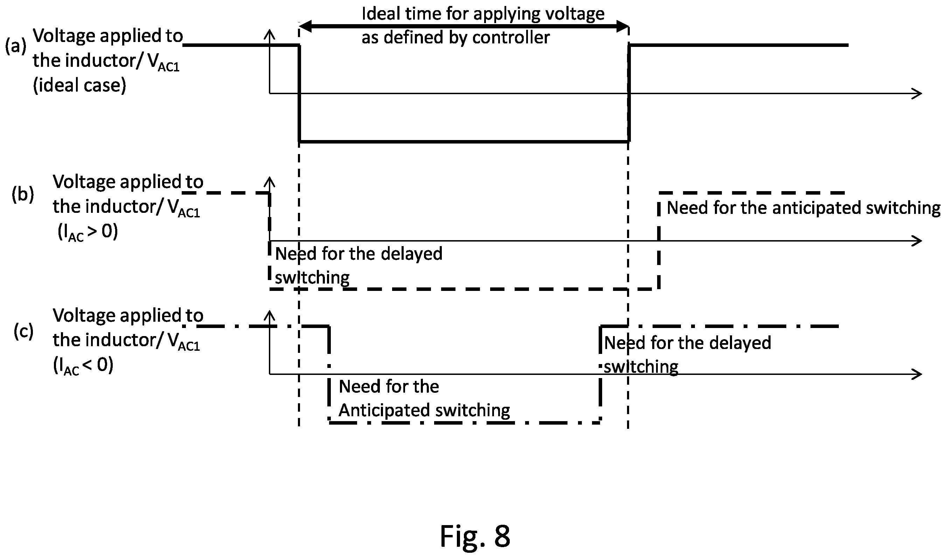

Fig. 8 shows the voltage applied to the inductor under three conditions according to an embodiment of the present disclosure. In the ideal case, as shown in FIG. 8(a), the applied voltage (e.g., V_{AC1}) transitions smoothly from positive to negative voltage with an exact 50% duty cycle, ensuring a balanced output.

In FIG. 8(b), where I_{AC} > 0, the inductor voltage (e.g., V_{AC1}) initially follows the ideal switching pattern. However, during the deadtime, the current polarity causes a negative DC offset, as the second active switching component 712 may conduct during the deadtime period, and the negative voltage is applied. To compensate the voltage deviation and avoid the negative DC component, the switching time of the active switching components 711 and 712 may be firstly delayed and then anticipated. Specifically, the second active switching component 712 may be turned on later and turned off earlier than planned, and the first active switching component 711 may be turned off later and turned on earlier than planned to match the ideal time for applying voltage.

Similarly, in FIG. 8(c), for the case where I_{AC} < 0, the inductor opposes the switching transition, leading to a temporary voltage deviation and a positive DC component during the deadtime, as the first active switching component 711 may conduct during the deadtime period, and the positive voltage is applied. To avoid the positive DC component, the switching time of the active switching components 711 and 712 may be firstly anticipated and then delayed.

Specifically, the first active switching component 711 may be turned on earlier than planned and turned off later, and the second active switching component 712 may be turned on earlier than planned and turned off later to match the ideal time for applying voltage.

Therefore, these voltage variations illustrate the impact of deadtime and the current polarity uncertainty on the applied voltage to the inductor, which can be mitigated using optimized switching strategies such as anticipating or delaying the switching time of the active switching components according to an embodiment of the present disclosure.

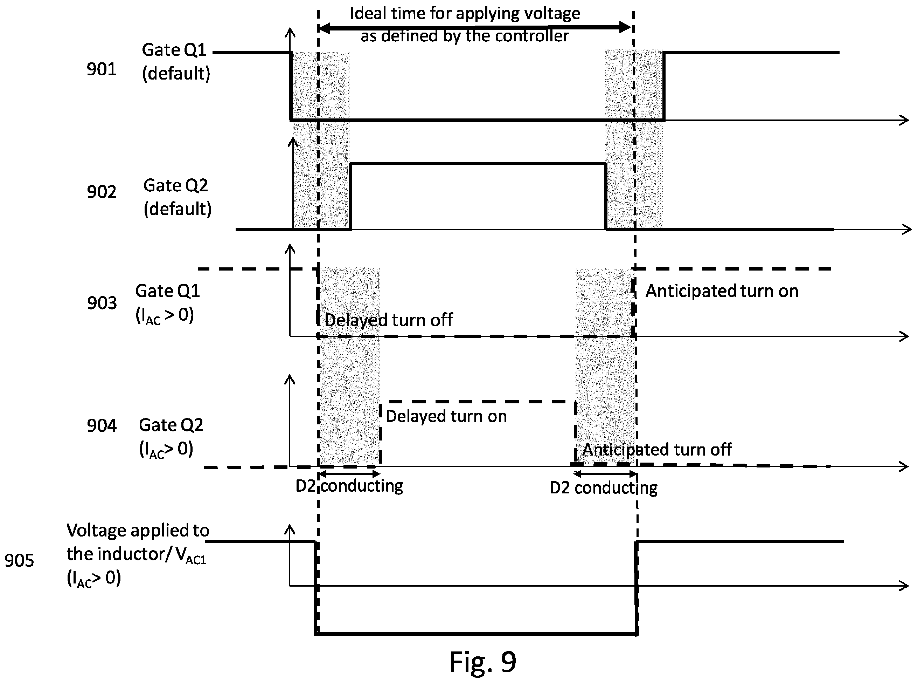

Fig. 9 shows exemplary signals sent by modulator for gate Q1 and gate Q2 according to an embodiment of the present disclosure. A default signal 901 (e.g., common reference signal) controls the first active switching component 711 (e.g., gate Q1). The first active switching component is ON when the signal value is 1 and is OFF when the signal value is 0. The default switching-on time and the switching-off time are indicated by the default signal 901. A default signal 902 (e.g., common reference signal) controls the second active switching component 712 (e.g., gate Q2). The second active switching component is ON when the value is 1 and is OFF when the value is 0. The default switching-on time and the switching-off time are indicated by the default signal 901.

According to an embodiment of the present disclosure, modified signals 903 and 904 show the adjusted switching times to align with the ideal time for applying voltage as defined by the controller (e.g., FIG. 8(a)) when I_{AC} > 0, thereby avoiding any negative DC component. Specifically, at the beginning, the gate Q1 is turned on and therefore the positive voltage is applied. Then, the gate Q1 is turned off at the defined ideal time for applying the negative voltage. According to an embodiment of the present disclosure, the switching-off time of gate Q1 is delayed by a time period T_{d1} relative to the default switching-off time as shown in signal 901 to avoid the negative DC component. Then, during the first deadtime period, the diode D2 conducts due to the polarity of the monitored current, and the negative voltage starts to be applied. Subsequently, the gate Q2 is turned on, with its switching-on time being delayed by a time period T_{d1}' relative to the default switching-on time indicated in signal 902, and the negative voltage continues to be applied. The gate Q2 is turned off at the beginning of the second deadtime period. According to an embodiment of the present disclosure, the switching-off time of gate Q2 is anticipated by a time period Tₐ₁' relative to the default switching-off time as shown in signal 902 to avoid negative DC component. During the second deadtime period, the diode D2 conducts, and therefore the negative voltage is applied. After the second deadtime period, gate Q1 is turned ON, with its switching-on time being anticipated by a time period Tₐ₁ relative to the default switching-on time indicated in signal 901, and the positive voltage starts to be applied at the ideal time.

According to an embodiment of the present disclosure, the time period T_{d1} and Tₐ₁ have the same duration, and the time period T_{d1}' and Tₐ₁' have the same duration, provided that the deadtime is the same for both active switching components, and the current polarity remains unchanged during the deadtime period.

According to an embodiment of the present disclosure, as indicated in FIG. 9, when I_{AC} > 0, voltage applied to the inductor (e.g., V_{AC1}) match the ideal case, and the negative DC component is avoided by firstly delaying the switching time and then anticipating the switching time of two active switching components.

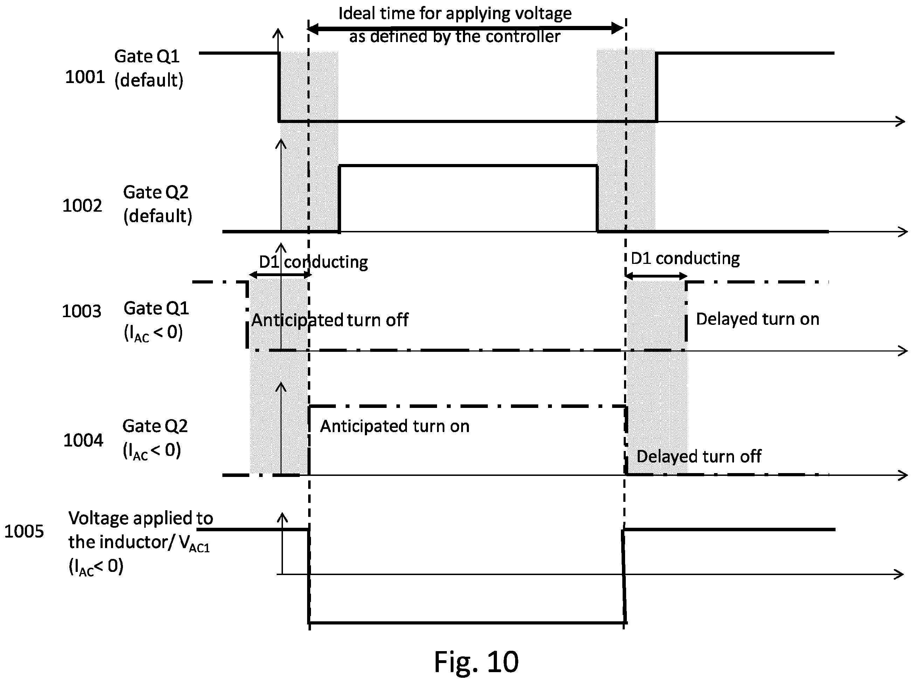

Fig. 10 shows exemplary signals sent by modulator for gate Q1 and gate Q2 according to an embodiment of the present disclosure. A default signal 1001 (e.g., common reference signal) controls the first active switching component 711 (e.g., gate Q1). The first active switching component is ON when the signal value is 1 and is OFF when the signal value is 0. The default switching-on time and the switching-off time are indicated by the default signal 1001. A default signal 1002 (e.g., common reference signal) controls the second active switching component 712 (e.g., gate Q2). The second active switching component is ON when the signal value is 1 and is OFF when the signal value is 0. The default switching-on time and the switching-off time are indicated by the default signal 1002.

According to an embodiment of the present disclosure, modified signals 1003 and 1004 show the adjusted switching times of the active switching components to align with the ideal time for applying voltage as defined by the controller (e.g., FIG. 8(a)) when I_{AC} < 0, thereby avoiding any positive DC component.

Specifically, at the beginning, gate Q1 is turned on, and the positive voltage is applied. Then, the gate Q1 is turned off at the beginning of the first deadtime period. According to an embodiment of the present disclosure, the switching-off time of gate Q1 is anticipated by a time period Tₐ₂ relative to the default switching-off time as shown in signal 1001. Then, during the first deadtime period, the diode D1 conducts due to the polarity of the monitored current, and the positive voltage continues to be applied. Subsequently, the gate Q2 is turned on, with its switching-on time being anticipated by a time period Tₐ₂' compared to the default switching-on time indicated in signal 1002, and the negative voltage starts to be applied at an ideal time. Then, the gate Q2 is turned off at the ideal time for applying the positive voltage. According to an embodiment of the present disclosure, the switching-off time gate Q2 is delayed by a time period T_{d2}' relative to the default switching-off time as shown in signal 1002 to avoid positive DC component. During the second deadtime period, the diode D1 conducts, and therefore the positive voltage starts to be applied at the defined ideal time for applying the positive voltage. After the second deadtime period, gate Q1 is turned on, with its switching-on time being delayed by a time period T_{d2} relative to the default switching-on time indicated in signal 1001.

According to an embodiment of the present disclosure, the time period T_{d2} and Tₐ₂ have the same duration, and the time period T_{d2}' and Tₐ₂' have the same duration, provided that the deadtime is the same for both active switching components, and the current polarity remains unchanged during the deadtime period. According to an embodiment of the present disclosure, the time period is in relationship with the deadtime.

According to an embodiment of the present disclosure, as indicated in FIG. 10, when I_{AC} < 0, voltage applied to the inductor (e.g., V_{AC1}) match the ideal case (e.g., FIG. 8(a)), and the positive DC component is avoided by firstly anticipating the switching time and then delaying the switching time of two active switching components.

Therefore, precise switching time and an ideal output voltage (e.g., V_{AC1}) provided by some embodiments of the present disclosure further reduces the DC component and the deadtime effect.

According to an embodiment, the third active switching component (e.g., Q3), the fifth active switching component (e.g., Q5), and the seventh active switching component (e.g., Q7) are adjusted in the same manner as the first switching component (e.g., Q1).

According to an embodiment, the fourth active switching component (e.g., Q4), the sixth active switching component (e.g., Q6), and the eighth active switching component (e.g., Q8) are adjusted in the same manner as the second switching component (e.g., Q2).

In other words, the third active switching component and the fourth active switching component may be adjusted in response to the polarity of the monitored current being positive. According to an embodiment, a switching-off time of the third active switching component and a switching-on time of the fourth active switching component are delayed and a switching-on time of the third active switching component and a switching-off time of the fourth active switching component are anticipated. According to an embodiment, the third active switching component and the fourth active switching component may be adjusted in response to the polarity of the monitored current being negative. According to an embodiment, a switching-off time of the third active switching component and a switching-on time of the fourth active switching component are anticipated and a switching-on time of the third active switching component and a switching-off time of the fourth active switching component are delayed. The same applies to the other switching components mentioned above. According to an embodiment, the adjustment of the switching components in each branch is performed independently from another branch.

By dynamically adjusting switching timing of the active switching component or a group of active switching components, the DC transient component in the current of the inductive component can be avoided, and the inverter can optimize efficiency, minimize power losses, and enhance waveform quality while prevent short circuits.

According to an embodiment, the first active switching component and the second active switching component are operated in an opposite way, such that when the first active switching component is in a conducting state, the second active switching component is in a non-conducting state, and vice versa.

According to an embodiment, the third active switching component and the fourth active switching component are operated in an opposite way, such that when the third active switching component is in a conducting state, the fourth active switching component is in a non-conducting state, and vice versa.

According to an embodiment, the fifth active switching component and the sixth active switching component are operated in an opposite way, such that when the fifth active switching component is in a conducting state, the sixth active switching component is in a non-conducting state, and vice versa.

According to an embodiment, the seventh active switching component and the eighth active switching component are operated in an opposite way, such that when the seventh active switching component is in a conducting state, the eighth active switching component is in a non-conducting state, and vice versa.

According to an embodiment, the phase shift may be between the first diode D1 and the third diode D3, the fifth diode D5 and the seventh diode D7, the first diode D1 and the fifth diode D5.

According to an embodiment, the phase shift between the first diode D1 and the third diode D3 may be kept to zero, and the phase shift between the fifth diode D5 and the seventh diode D7 may be kept to zero. According to an embodiment, the phase shift between the first diode D1 and the fifth diode D5 may be controlled.

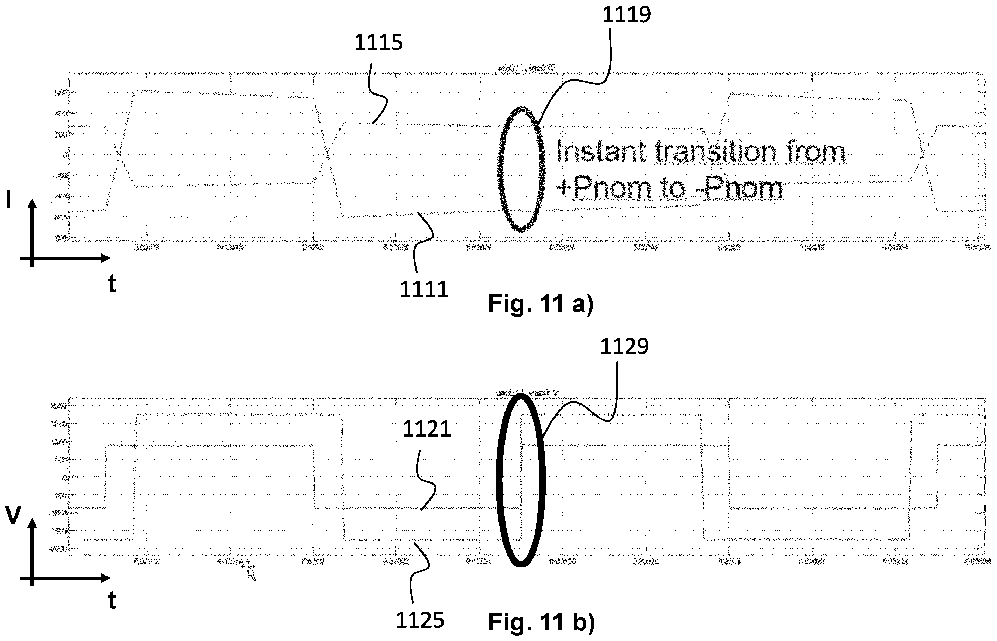

Fig. 11a and 11b show simulated current and voltage responses to a step phase shift applied to a power converter according to an embodiment of the present disclosure. In particular, the power converter comprises the transformer unit 150 of the embodiment shown in Fig. 1. However, it is understood by the skilled person that the present disclosure is not limited thereto.

A primary side current 1111 of the transformer unit 150 and a secondary side current 1115 of the transformer unit 150 exhibits a smooth transition when a phase shift step change is applied, as evident by the signals within the encircled region 1119. Furthermore, a primary voltage 1121 of the transformer unit 150 and a secondary voltage of the transformer 1125 are in phase when a phase shift step change is applied, as evident by the signals within the encircled region 1129. Therefore, the deadtime mitigation method of the present disclosure removes DC component in a current, thereby improving the recovery time to achieve an instant power transition.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for power control of a power converter comprising:
controlling, with a first signal a first active switching component (111) in a switching unit (110) of at least one branch;
controlling, with a second signal a second active switching component (112) in the same switching unit (110);
determining a polarity of a monitored current through at least one inductive component coupled to the at least one branch; and
adjusting the first active switching component (111) and the second active switching component (112) in response to the polarity of the monitored current being positive, wherein a switching-off time of the first active switching component (111) and a switching-on time of the second active switching component (112) are delayed, and a switching-on time of the first active switching component (111) and a switching-off time of the second active switching component (112) are anticipated; or
adjusting the first active switching component (111) and the second active switching component (112) in response to the polarity of the monitored current being negative, wherein a switching-off time of the first active switching component (111) and a switching-on time of the second active switching component (112) are anticipated and a switching-on time of the first active switching component (111) and a switching-off time of the second active switching component (112) are delayed.

2. The method according to claim 1, further comprising:
generating, a branch output voltage (154) based on the adjustments of the first active switching component (111) and the second active switching component (112).

3. The method according to claim 1 or 2, wherein the first active switching component (111) and the second active switching component (112) are operated in an opposite way,
such that when the first active switching component (111) is in a conducting state, the second active switching component (112) is in a non-conducting state, and when the first active switching component (111) is in a non-conducting state, the second active switching component (112) is in a conducting state.

4. The method according to any one of claims 1 to 3, wherein an activation period of the first signal and an activation period of the second signal are compared to a reference period *T_{ref}* to calculate a first duty cycle for the at least one branch, and
wherein the activation period of the first signal and the activation period of the second signal are set such that the first active switching component (111) and the second active switching component (112) are not conducting for a time range *T_{dead}.*

5. The method according to claim 4, wherein a first electrical component (113) is arranged in parallel to the first active switching component (111) and a second electrical component (114) is arranged in parallel to the second active switching component (112), wherein during the time range *T_{dead}* the first electrical component (113) and the second electrical component (114) are configured to act as a current source or sink.

6. The method according to claim 4 or 5, wherein during the adjusting the first active switching component (111) and the second active switching component (112), a ratio between the time range *T_{dead}* and a reference period *T_{ref}* is kept constant.

7. The method according to any one of claims 1 to 6, comprising iterating the determining a polarity of the monitored current and the adjusting the first active switching component (111) and the second active switching component (112).

8. The method according to any one of claims 1 to 7, wherein the first active switching component (111) and a second active switching component (112) are at least one of an insulated-gate bipolar transistor, a metal-oxide-semiconductor field-effect transistor, a bipolar transistor or a thyristor.

9. The method according to any one of claims 1 to 8, wherein the power converter comprises or is at least one of an AC/AC, AC/DC, DC/DC, or DC/AC converter, in particular an active bridge converter, more particularly a dual active bridge converter.

10. The method according to any one of claims 1 to 9, further comprising:
independently adjusting a third active switching component (121), a fifth active switching component (131) and a seventh active switching component (141) in the same manner as the first active switching component (111); or
independently adjusting a fourth active switching component (122), a sixth active switching component (132) and an eighth active switching component (142) in the same manner as the second active switching component (112).

11. A controller for power control of a power converter, comprising:
a processor configured to:
control, with a first signal, a first active switching component (111) in a switching unit (110) of at least one branch;
control, with a second signal, a second active switching component (112) in the same switching unit (110);
determine a polarity of a monitored current through at least one inductive component coupled to the at least one branch; and
adjust the first active switching component (111) and the second active switching component (112) in response to the polarity of the monitored current being positive, wherein a switching-off time of the first active switching component (111) and a switching-on time of the second active switching component (112) are delayed, and a switching-on time of the first active switching component (111) and a switching-off time of the second active switching component (112) are anticipated; or
adjust the first active switching component (111) and the second active switching component (112) in response to the polarity of the monitored current being negative, wherein a switching-off time of the first active switching component (111) and a switching-on time of the second active switching component (112) anticipated, and a switching-on time of the first active switching component (111) and a switching-off time of the second active switching component (112) are delayed.

12. The controller according to claim 11, the processor is further configured to:
generate, a branch output voltage (154) based on the adjustments of the first active switching component (111) and the second active switching component (112).

13. The controller according to claim 11 or 12, wherein the first active switching component (111) and the second active switching component (112) are operated in an opposite way,
such that when the first active switching component (111) is in a conducting state, the second active switching component (112) is in a non-conducting state, and when the first active switching component (111) is in a non-conducting state, the second active switching component (112) is in a conducting state.

14. The controller according to any one of claims 11 to 13, wherein the processor is configured to iterate the monitoring a current, the determining a polarity of the current and the adjusting the first active switching component (111) and the second active switching component (112).

15. A system comprising a controller according to any one of claims 11 to 14 and a power converter comprising a first active switching component (111) and a second active switching component (112) in a switching unit (110) of at least one branch and at least one inductive component coupled to the at least one branch.
